# EUROPÄISCHE PATENTSCHRIFT

(11) **EP 4 067 241 B1**
(45) Veröffentlichungstag und Bekanntmachung des Hinweises auf die Patenterteilung: **24.04.2024**
(21) Anmeldenummer: 22164994.0
(22) Anmeldetag: 29.03.2022
(51) Int. Cl.: B65B 5/10, B65B 35/44, B65B 43/44, B65B 43/46, B65B 43/52, B65B 43/54, B65B 57/14, B65B 59/00, B65B 59/02, B65B 61/28, B65B 65/00, B25J 11/00, B25J 15/00, B25J 15/06, B65G 47/34, B25J 9/00

(54) **VERFAHREN ZUM EINLEGEN VON PRODUKTEN IN TRAYS UND BELADESTATION**
METHOD FOR INSERTING PRODUCTS IN TRAYS AND LOADING STATION
PROCÉDÉ DE CHARGEMENT DE PRODUITS SUR DES PLATEAUX ET STATION DE CHARGEMENT

(30) Priorität: 30.03.2021 DE 102021107944
(43) Veröffentlichungstag der Anmeldung: 05.10.2022
(73) Patentinhaber: MULTIVAC Sepp Haggenmüller SE & Co. KG, 87787 Wolfertschwenden (DE)
(72) Erfinder: STORHAS, Matthias, 87727 Babenhausen (DE); WÖRZ, Norbert, 87746 Erkheim (DE)
(74) Vertreter: Grünecker Patent- und Rechtsanwälte PartG mbB

(56) Entgegenhaltungen:
- EP-A1- 2 500 276
- WO-A1-2021/044053
- US-A1- 2019 270 197

## Beschreibung

Die vorliegende Erfindung bezieht sich auf ein Verfahren zum Einlegen von Produkten in Trays an einer Beladestation für einen Traysealer gemäß Anspruch 1. Ferner bezieht sich die Erfindung auf eine Beladestation für einen Traysealer gemäß dem Anspruch 6.

EP 1 352 831 A1 offenbart ein Verfahren sowie eine Vorrichtung zum Einfüllen von Stückgut in Behälter mittels einer Pickereinrichtung, wobei eine Relativgeschwindigkeit zwischen der Zufuhr der Behälter und der Zufuhr des Stückguts im Bereich der Pickereinrichtung gesteuert wird. Dabei kann die Relativgeschwindigkeit in Abhängigkeit von einem Füllstand mindestens eines der Pickereinrichtung zugeordneten Speicherelements erfolgen.

WO 2021/044053 offenbart ein Verfahren sowie eine Vorrichtung zum Einlegen von Produkten in Trays an einer Beladestation, wobei an der Beladestation von mehreren darin auf einem Trayförderer bereitgestellten Trays ein mittels einer Greifereinheit mit Produkt beladener Tray direkt mittels eines an der Greifereinheit ausgebildeten Trayschiebers auf eine seitliche Position der Beladestation geschoben wird.

An einer weiteren in der Praxis eingesetzten Beladestation werden Trays zum Beladen mit Produkten hintereinander auf einem Trayförderer positioniert. Sobald der an vorderster Stelle zugeführte Tray sollwertig, z.B. mit einem vorbestimmten Gewicht, mit Produkten beladen ist, wird er durch einen mechanischen Pusher auf ein neben dem Trayförderer angeordnetes Abführband geschoben und von dort zu einem stromabwärts positionierten Traysealer transportiert. Aufgrund der herkömmlichen, insbesondere gewichtsbasierten, Beladelogik kann es dazu kommen, dass eines der anderen Trays auf dem Trayförderer, d.h. nicht der an vorderster Stelle zugeführte Tray, zuerst vollständig mit Produkt beladen ist und dann bis zum Pusher weiter durchgetaktet werden muss, um vom Trayförderer auf das Abführband geschoben zu werden. Dies hat zur Folge, dass dieser zuerst vollständig beladene Tray später als möglich am stromabwärts positionierten Traysealer ankommt, was dessen Produktionsrate reduziert. In anderen Worten bleibt der vollständig beladene Tray unnötig lange auf dem Trayförderer positioniert, bis er an die vorderste Stelle bis zum Pusher nachgerückt ist. Dies verzögert den Beladeprozess und führt an der Beladestation sowie insbesondere auch an anderen funktional damit zusammenarbeitenden Maschinen zu einer reduzierten Durchsatzrate.

Aufgabe der Erfindung ist es, ein Verfahren sowie eine Beladestation für einen Traysealer dahingehend zu verbessern, dass sich damit eine höhere Durchsatzrate ergibt.

Diese Aufgabe wird gelöst mittels eines Verfahrens gemäß Anspruch 1. Ferner wird diese Aufgabe gelöst durch eine Beladestation für einen Traysealer gemäß Anspruch 6.

Vorteilhafte Weiterbildungen der Erfindung sind durch die abhängigen Ansprüche angegeben.

Die Erfindung bezieht sich auf ein Verfahren zum Einlegen von Produkten in Trays an einer Beladestation für einen Traysealer. Erfindungsgemäß wird an der Beladestation von mehreren darin auf einem Trayförderer bereitgestellten Trays ein mittels einer Greifereinheit sollwertig mit Produkt beladener Tray direkt mittels eines an der Greifereinheit ausgebildeten Trayschiebers auf ein Abführband der Beladestation geschoben. Damit ist es möglich, einen vollständig mit Produkt beladenen Tray unabhängig von seiner Positionierung auf dem Trayförderer auf das Abführband zu schieben, wodurch dessen Platz auf dem Trayförderer für einen anderen, noch nicht sollwertig beladenen Tray unverzüglich frei wird. Durch diese Beladelogik kann verhindert werden, dass vollständig beladene Trays zu lange einen Platz auf dem Trayförderer einnehmen, wodurch die Durchsatzrate der Beladestation gemindert werden könnte.

Beim erfindungsgemäßen Verfahren wird die Greifereinheit sowohl zum Beladen der Trays als auch zum Verschieben vollständig mit Produkt beladener Trays eingesetzt, wodurch sie eine Doppelfunktion an der Beladestation erfüllt. Die Greifereinheit selbst ist in kompakter Bauweise an der Beladestation vorhanden, um das Beladen der Trays mit Produkten und das Verschieben der mit Produkten beladenen Trays zeitlich optimiert durchzuführen.

Ein Tray kann im sollwertig beladenen Zustand ohne Verzögerung mittels der Greifereinheit auf das Abführband geschoben werden. Der Begriff "sollwertig" kann hinsichtlich eines gewünschten Gesamtgewichts, einschließlich einer tolerierten Gewichtsabweichung, der in die Trays hineingelegten Produkte und/oder hinsichtlich einer gewünschten Stückzahl darin eingelegter Produkte vorliegen.

Vorzugsweise schiebt die Greifereinheit den sollwertig mit Produkt beladenen Tray bereits dann auf das Abführband, wenn ein anderer auf dem Trayförderer vorausgehend geförderter Tray noch nicht sollwertig mit Produkt beladen ist. Hiermit wendet man sich von der herkömmlichen Beladelogik *"first in* - *first out"* ab. Stattdessen ermöglicht es die Greifereinheit der Erfindung, dass ein von ihr sollwertig beladener Tray unverzüglich auf das Abführband verschoben wird. Dabei spielt der Beladezustand der anderen auf dem Trayförderer positionierten Trays keine Rolle. In Abkehr von der herkömmlichen Praxis wird daher bei dieser Ausführungsform das Beladeprinzip "*first full - first out"* verfolgt, wodurch sich die Durchsatzrate steigern lässt.

Eine Variante sieht vor, dass die Greifereinheit den sollwertig mit Produkt beladenen Tray über ein seitlich am Trayförderer angeordnetes, zwischen einer ersten und einer zweiten Stellung verstellbares Leitsystem auf das Abführband schiebt. Insbesondere ist es möglich, dass das Leitsystem am Trayförderer, wenn es in seiner ersten Stellung positioniert ist, als Trayführung entlang des Trayförderers zum Einsatz kommt. In der zweiten Stellung kann das Leitsystem gemeinsam mit dem Trayförderer und dem Abführband eine Transportebene zum Verschieben mit Produkt beladener Trays ausbilden. Das Leitsystem kann daher in dessen zweiter Stellung als Brücke zwischen dem Trayförderer und dem Abführband eingesetzt werden, über welche mit Produkt beladene Trays geschoben werden.

Das Leitsystem kann beispielsweise eine Schiene aufweisen, die sich im Wesentlichen über die Länge des Trayförderers erstreckt und zwischen der ersten und der zweiten Stellung höhenverstellt wird. Vorzugsweise ist die Schiene als Lochprofil ausgebildet, damit sich die vollständig beladenen Trays besser über sie schieben lassen.

Gemäß einer Ausführungsform der Erfindung wird der Trayschieber an der Greifereinheit aus einer eingefahrenen Position in eine ausgefahrene Position verstellt, um den sollwertig mit Produkt beladenen Tray auf das Abführband zu verschieben. Das Verstellen des Trayschiebers zwischen der eingefahrenen und der ausgefahrenen Position kann beispielsweise mittels eines an der Greifereinheit vorgesehenen pneumatischen Antriebs, z.B. mittels eines daran installierten Pneumatikzylinders, geschehen. Vorstellbar ist es, dass das Verstellen des Trayschiebers zwischen der eingefahrenen und der ausgefahrenen Position an eine Bewegung eines an der Greifereinheit vorgesehenen Niederhalters gekoppelt wird.

Vorzugsweise werden die auf dem Trayförderer positionierten Trays während des Beladevorgangs und/oder während ihrer Zufuhr auf den Trayförderer zumindest temporär an deren Trayböden angesaugt. Dadurch wird erreicht, dass die auf dem Trayförderer platzierten und/oder geförderten Trays eine gewünschte Ausrichtung beibehalten, damit die Greifereinheit mittels des daran vorgesehenen Trayschiebers die mit Produkt beladenen Trays optimal vom Trayförderer auf das Abführband schieben kann. Vorstellbar wäre es, dass während des Verschiebens eines sollwertig mit Produkt beladenen Trays der Saugeffekt an dessen Trayboden unterbrochen wird. Dies ermöglicht ein kräftemäßig leichteres Verschieben des Trays und kann ein nach unten Kippen des sollwertig mit Produkt beladenen Trays während des Verschiebens auf das Abführband verhindern.

Die Erfindung bezieht sich auch auf eine Beladestation für einen Traysealer, umfassend mindestens eine Pickereinrichtung mit einer Greifereinheit, die einen Produktgreifer aufweist, der dazu ausgebildet ist, ein der Beladestation bereitgestelltes Produkt aufzunehmen und dieses in einen der Beladestation zugeführten Tray einzulegen.

Erfindungsgemäß weist die Greifereinheit ferner einen Trayschieber zum Verschieben eines mittels des Produktgreifers beladenen Trays auf. Dadurch, dass die Greifereinheit sowohl einen Produktgreifer zum Beladen der Trays als auch einen Trayschieber zum Verschieben der Trays aufweist, bildet sie an der erfindungsgemäßen Beladestation eine multifunktionale Einheit aus, die in kompakter Bauweise einen erhöhten Durchsatz von sollwertig produktbeladenen Trays ermöglicht. Dies überträgt sich in positiver Weise auf den Durchsatz des stromabwärts positionierten Traysealers.

Die an der erfindungsgemäßen Beladestation eingesetzte Greifereinheit ermöglicht v.a. auch deshalb einen erhöhten Durchsatz für die Beladestation, weil die Greifereinheit beim Beladen eines Trays ohnehin oberhalb desselben, wenn er sollwertig mit Produkt beladenen ist, positioniert ist, und damit sofort, d.h. ohne dass sie in eine Ausgangsposition zurückgefahren wird, den unter ihr fertig beladenen Tray auf das Abführband verschieben kann. In anderen Worten ermöglicht es die an der erfindungsgemäßen Beladestation eingesetzte Greifereinheit, dass das Beladen des Trays und das Verschieben des Trays im sollwertig beladenen Zustand zeitlich lückenlos ineinander übergehen, wodurch Prozesszeiten an der Beladestation optimiert werden können. Dies wirkt sich insgesamt positiv auf weitere Prozesszeiten an den in der Peripherie der Beladestation positionierten, mit ihr zusammenarbeitenden Maschinen aus.

Eine vorteilhafte Variante sieht vor, dass der Trayschieber mindestens eine Schieberkante zum Verschieben beladener Trays umfasst. Mittels der Schieberkante kann der Trayschieber direkt an einem Trayrand des Trays auf Kontakt anstoßen, um den Tray vom Trayförderer auf das Abführband zu verschieben. Die Schieberkante kann in Form eines winkligen Blechteils oder winkligen Kunststoffteils ausgebildet sein. Eine Variante sieht vor, dass die Schieberkannte ein Profil ausbildet, dass an gegenüberliegenden Enden einer Seite des Trayrands diesen kontaktiert, um den Tray in einer gewünschten Ausrichtung auf das Abführband zu schieben.

Vorzugsweise umfasst die Greifereinheit mindestens einen pneumatischen Antrieb zum Verstellen des Trayschiebers, beispielsweise zwischen einer eingefahrenen und einer ausgefahrenen Stellung. Es ist möglich, dass der pneumatische Antrieb als Pneumatikzylinder ausgebildet ist, der an der Greifereinheit angeordnet mittels ihr zugeführter Druckluft versorgbar ist. Es ist vorstellbar, dass der pneumatische Antrieb an der Greifereinheit ausschließlich für den Betrieb des Trayschiebers ausgebildet ist. Alternativ dazu könnte es sein, dass der pneumatische Antrieb an der Greifereinheit eine weitere Funktionskomponente, beispielsweise einen Niederhalter, verstellt, wobei der Trayschieber an eine Bewegung des Niederhalters gekoppelt ist.

Vorstellbar ist es, dass die Greifereinheit mindestens eine Linearführung für den Trayschieber umfasst. Diese sorgt dafür, dass der Trayschieber an der Greifereinheit präzise verstellbar gelagert ist. Beispielsweise lässt sich der Trayschieber damit an der Greifereinheit einwandfrei zwischen einer eingefahrenen Stellung und einer ausgefahrenen Stellung verstellen. Ferner bietet die Linearführung, vor allem dann, wenn der Trayschieber in der ausgefahrenen Stellung ist, eine mechanische Verstärkung zum Verschieben vollständig mit Produkt beladener Trays. Damit bleibt der Trayschieber auf lange Sicht einwandfrei einsatzfähig.

Vorzugsweise ist der Produktgreifer als Sauggreifer oder als Niederhaltergreifer ausgebildet. Als Sauggreifer ist der Produktgreifer mit einer an der Beladestation vorgesehenen Vakuumpumpe verbunden. Als Sauggreifer kann der Produktgreifer die bereitgestellten Produkte an deren Oberseite ansaugen, um sie in die bereitgestellten Trays zu verladen. Als Niederhaltergreifer weist der Produktgreifer seitliche Aufnahmeschaufeln sowie einen dazwischen angeordneten Niederhalter auf. Mittels der Aufnahmeschaufeln kann der Produktgreifer unter ein bereitgestelltes Produkt hineinfahren und dieses aufnehmen. Der Niederhalter kann von oben auf das Produkt abgesenkt werden, um es auf den Aufnahmeschaufeln zu fixieren.

Gemäß einer Ausführungsvariante ist der Trayschieber an eine Bewegung des Niederhalters gekoppelt. Zum Verschieben eines vollständig mit Produkt beladenen Trays kann der Niederhalter und damit auch der daran befestigte Trayschieber aus einer abgesenkten Position, in welcher der Niederhalter das aufgenommene Produkt auf den Aufnahmeschaufeln fixiert, in eine weiter abgesenkte Position verstellt werden, wodurch der Trayschieber, insbesondere dessen Schieberkannte, unterhalb der Aufnahmeschaufeln positioniert ist, um den Tray an dessen Trayrand zu kontaktieren und zu verschieben.

Eine bevorzugte Variante sieht vor, dass die Beladestation mindestens ein Transportband zum Zuführen einzelner Produkte, mindestens einen Trayförderer zum Zuführen von leeren Trays und mindestens ein Abführband zum Abtransport produktbeladener Trays umfasst. Das Transportband, der Trayförderer und das Abführband können in dieser Reihenfolge nebeneinander positioniert sein, insbesondere parallele Transportabschnitte ausbilden.

Vorzugsweise weist die Beladestation zwischen dem Trayförderer und dem Abführband zumindest abschnittsweise ein Leitsystem auf, das zwischen einer ersten Stellung, in welcher das Leitsystem für den Trayförderer als Trayführung einsetzbar ist, und einer zweiten Stellung verstellbar ist, in welcher das Leitsystem zwischen dem Trayförderer und dem Abführband eine Brücke ausbildet, über die mit Produkt beladene Trays geschoben werden können.

Vorstellbar ist es, dass das Leitsystem eine höhenverstellbare Schiene aufweist, die in der ersten Stellung eine Führungskante für die auf dem Trayförderer geförderten Trays ausbildet, und in der zweiten Stellung eine zwischen dem Trayförderer und dem Abführband vorliegende Lücke schließt, so dass der Trayförderer, die Schiene und das Abführband eine gemeinsame Transportebene ausbilden.

Anstelle einer Schiene könnte das Leitsystem mehrere rotierbare Leitsegmente aufweisen, die den seitlich entlang des Trayförderer angeordnet sind. Die schwenkbaren Leitsegmente bilden in deren erster Stellung am Trayförderer eine seitliche Bordwand als Trayführung aus und sind um eine horizontale Schwenkachse in die zweite Stellung rotierbar, in welcher die Leitsegmente eine Brücke zum Schließen der zwischen dem Trayförderer und dem Abführband vorliegenden Lücke ausbilden. Über diese Brücke können die Trays auf das Abführband geschoben werden. Die jeweiligen Leitsegmente sind einzeln, in Gruppen oder allesamt gemeinsam ansteuerbar, beispielsweise mittels eines am Trayförderer gelagerten Servomotors.

Vorzugsweise umfasst der Trayförderer mindestens zwei parallel verlaufende Transportriemen sowie mindestens eine dazwischen angeordnete Saugeinheit, die dazu ausgebildet ist, die entlang des Trayförderers transportierten Trays an deren Trayböden anzusaugen. Das Ansaugen der jeweiligen Trays verhindert, dass diese beim Transport entlang des Trayförderers verrutschen, wodurch sie ggf. eine unerwünschte Schräglage auf dem Trayförderer einnehmen. Das Ansaugen der jeweiligen Trays begünstigt daher das Beibehalten einer gewünschten Ausrichtung der Trays entlang des Trayförderers.

Es ist möglich, dass der Trayförderer hinsichtlich einer Größe der zu beladenden Trays mehrere in Transportrichtung des Trayförderers verstellbare Stopperelemente aufweist. Die Stopperelemente können dafür sorgen, dass die auf dem Trayförderer ankommenden Trays in vorbestimmten Abständen zueinander für den Beladevorgang positioniert werden. Ferner können die jeweiligen Stopperelemente zumindest bereichsweise als Unterstützung für die jeweiligen Trayböden eingesetzt werden, damit die jeweiligen Trays v.a. im beladenen Zustand stabil auf dem Trayförderer positioniert sind.

Die Erfindung bezieht sich auch auf eine Verpackungsanlage, die eine Aufschneidemaschine zum Herstellen einzelner Produkte, in Fachkreisen auch als Portionierer bezeichnet, ein Wägesystem zum Wiegen der einzelnen Produkte, mindestens eine erfindungsgemäße Beladestation sowie einen Traysealer zum Verschließen produktbeladener Trays umfasst. Diese Verpackungsanlage bildet somit eine Verpackungslinie aus, deren Durchsatz maßgeblich durch die erfindungsgemäße Beladestation und das daran durchgeführte erfindungsgemäße Verfahren begünstigt wird.

An der Verpackungsanlage kann zwischen der Aufschneidemaschine und der erfindungsgemäßen Beladestation mindestens eine Zuführeinrichtung mit einer Pufferfunktion für die bereitgestellten Produkte vorgesehen sein. Diese Zuführeinrichtung kann dazu ausgebildet sein, die von der Aufschneidemaschine geschnittenen Produkte anzusammeln, diese in einem vorbestimmten Format zu gruppieren, und sie in gewünschten Abständen an die Beladestation weiterzugeben, um den Produktfluss an der Beladestation besser zu koordinieren.

An der Zuführeinrichtung und/oder an der Beladestation kann mindestens ein Bilderfassungssystem angeordnet sein, dass dazu ausgebildet ist, die zugeführten Produkte jeweils für den Beladevorgang mittels der Pickereinrichtung zu erfassen. Die mittels des Bilderfassungssystems gemachten Bildaufnahmen können mit den jeweiligen stromaufwärts mittels des Wägesystems erfassten Gewichtsdaten kombiniert und zur Steuerung des Beladeprozesses mittels der Pickereinrichtung verwendet werden.

Vorteilhafte Ausführungsbeispiele der Erfindung werden anhand der Figuren näher erläutert. Im Einzelnen zeigen:
- Fig. 1: eine Verpackungsanlage mit zwei nebeneinander angeordneten Beladestationen,
- Fig. 2: die Verpackungsanlage aus Fig. 1 in Draufsicht,
- Fig. 3: eine Beladestation in insolierter Darstellung,
- Fig. 4A - J:: eine schematische Darstellung des erfindungsgemäßen Verfahrens,
- Fig. 5: einen Produktgreifer als Niederhaltergreifer mit einem Trayschieber,
- Fig. 6A: den Niederhaltergreifer aus Fig. 5 mit dem Trayschieber in einer eingefahrenen Stellung,
- Fig. 6B: den Niederhaltergreifer aus Fig. 5 mit dem Trayschieber in einer ausgefahrenen Stellung,
- Fig. 7: die Greifereinheit aus Fig. 5 beim Verschieben des Trays vom Trayförderer auf das Abführband,
- Fig. 8: eine als Sauggreifer ausgebildete Greifereinheit mit einem Trayschieber,
- Fig. 9A: einen Trayförderer in isolierter Darstellung mit einem mechanischen Pusher in einer eingefahrenen Stellung, und

- Fig. 9B: den Trayförderer aus Fig. 9A mit dem mechanischen Pusher in einer ausgefahrenen Stellung.

Gleiche Komponenten sind in den Figuren durchgängig mit gleichen Bezugszeichen versehen.

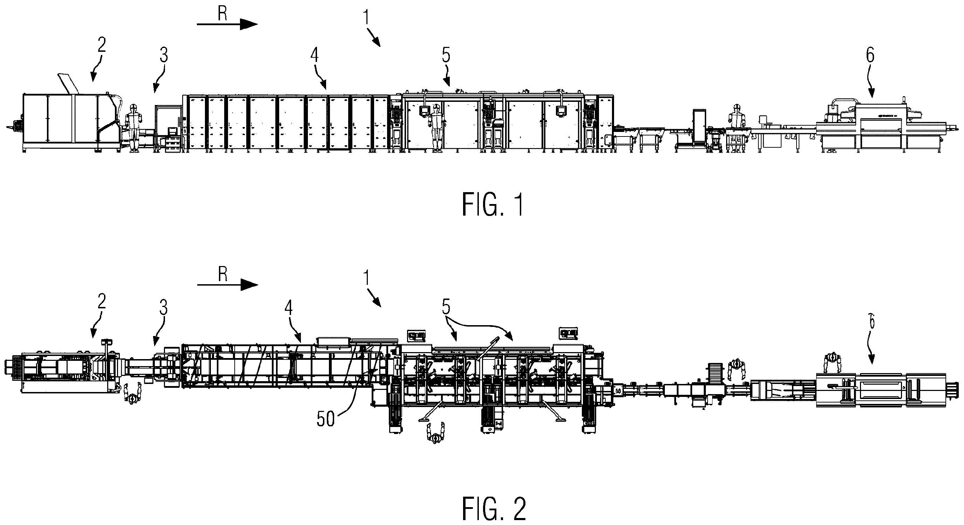

Fig. 1 zeigt eine Verpackungsanlage 1. Die Verpackungsanlage 1 umfasst eine Aufschneidemaschine 2 zum Herstellen einzelner Produkte P, ein Wägesystem 3 zum Wiegen der einzelnen Produkte P, eine Zuführeinrichtung 4, zwei Beladestationen 5 sowie einen Traysealer 6 zum Verschließen mit Produkt beladener Trays T, die in dieser Reihenfolge in Produktionsrichtung R angeordnet sind. Die Aufschneidemaschine 2, in Fachkreisen auch Portionierer genannt, ist dazu ausgebildet, am Eingang der Verpackungsanlage 1 Produkte P aufzuschneiden, beispielsweise Rippchen, die jeweils mittels des Wägesystems 3 gewogen, entlang der Zuführeinrichtung 4 in ein bestimmtes Format angeordnet, innerhalb der Beladestationen 5 in Trays T verladen und weiter zum Traysealer 6 transportiert werden, um dort in den Trays T verpackt zu werden.

Fig. 2 zeigt die Verpackungsanlage 1 aus Fig. 1 in der Draufsicht. Die nebeneinander angeordneten Beladestationen 5, von denen im Folgenden lediglich eine genauer beschrieben wird, dienen zum Beladen darin bereitgestellter Trays T mit in die Beladestationen 5 zugeführten Produkten P. Ferner sind die Beladestationen 5 zum Abtransport der mit Produkt beladenen Trays T in Richtung des Traysealers 6 ausgebildet. Eingangs der in Produktionsrichtung R zuerst angeordneten Beladestation 5 ist ein Bilderfassungssystem 50, auch Visionsystem genannt, positioniert.

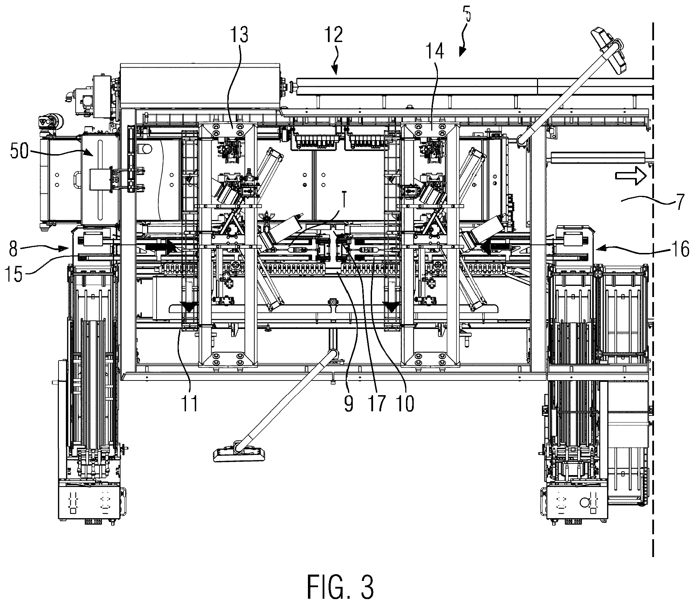

Fig. 3 zeigt eine der Beladestationen 5 in isolierter Darstellung aus der Draufsicht. Die Beladestation 5 umfasst ein Transportband 7 zum Zuführen einzelner Produkte P. Neben dem Transportband 7 ist ein Trayförderer 8 positioniert. Der Trayförderer 8 ist dazu ausgebildet, leere Trays T zum Beladen mit Produkten P innerhalb der Beladestation 5 bereitzustellen. Gemäß Fig. 3 verfügt der Trayförderer 8 über einen ersten Trayförderabschnitt 9 und einen zweiten Trayförderabschnitt 10, die hintereinander positioniert sind. Der erste und der zweite Trayförderabschnitt 9, 10 transportieren darauf positionierte Trays T aufeinander zu, d.h. in entgegengesetzten Richtungen, was anhand der aufeinander zu gerichteten Pfeile am Trayförderer 8 illustriert wird.

Ferner zeigt Fig. 3, dass die Beladestation 5 ein Abführband 11 umfasst, das zum Abtransport vollständig beladener Trays T eingesetzt wird. Die Beladestation 5 verfügt ferner über eine Pickereinrichtung 12 mit einem ersten Picker 13 und einem zweiten Picker 14. Der erste Picker 13 ist dazu konfiguriert, auf dem Transportband 7 bereitgestellte Produkte P aufzunehmen und in die auf dem ersten Trayförderabschnitt positionierten Trays T einzulegen. Der in Produktionsrichtung R stromabwärts positionierte zweite Picker 14 ist dazu konfiguriert, Produkte P, die vom ersten Picker 13 nicht verladen wurden, aufzunehmen und in die auf dem zweiten Trayförderabschnitt 10 positionierten Trays T einzulegen.

Fig. 3 zeigt weiter, dass eingangs des ersten Trayförderabschnitts 9 ein erster Entstapler 15 und eingangs des zweiten Trayförderabschnitts 10 ein zweiter Entstapler 16 positioniert sind. Die gemäß Fig. 3 vom Entstapler 15 an den ersten Trayförderabschnitt 10 abgegebenen Trays T sind auf dem ersten Trayförderabschnitt 10 an fünf benachbarten Positionen zur Aufnahme von Produkten P bereitgestellt. Die vom Entstapler 16 an den zweiten Trayförderabschnitt 10 abgegebenen Trays T werden ebenfalls an fünf benachbarten Positionen zum Beladen von Produkten P zur Verfügung gestellt. In Transportrichtung der beiden Trayförderabschnitte 9, 10 an der jeweiligen vordersten Position ist dem jeweiligen dort positionierten Tray T ein mechanischer Pusher 17 zugeordnet, um den an dieser Position im Laufe des Beladevorgangs vollständig beladenen Tray T auf das Abführband 11 zu verschieben.

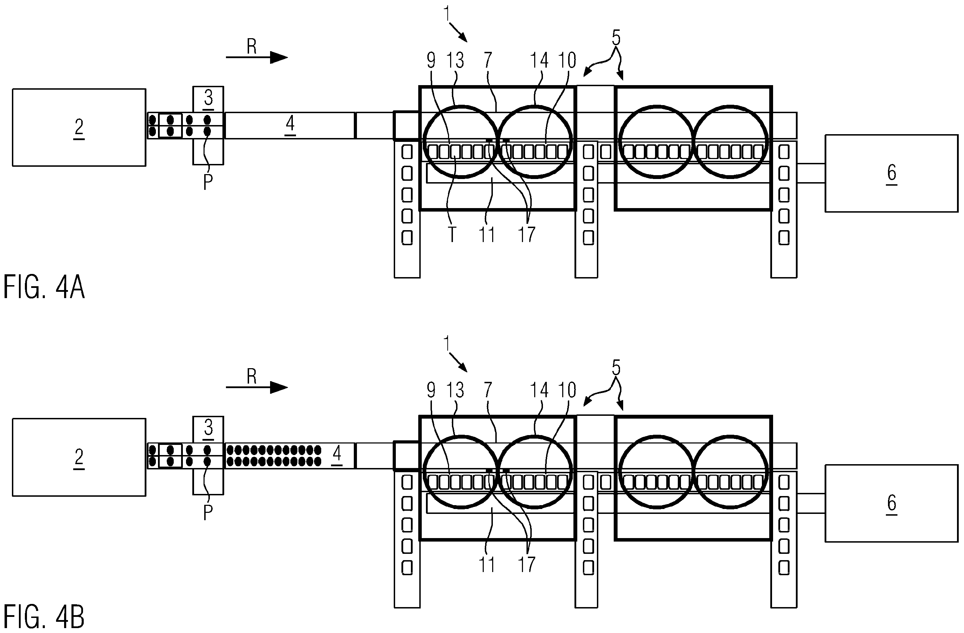

Die Fig. 4A bis 4J zeigen in schematischer Darstellung ein Verfahren zum Einlegen von Produkten P in Trays T in der Beladestation 5.

Zu Beginn werden gemäß Fig. 4A mittels der Aufschneidemaschine 2 einzelne Produkte P hergestellt, die anschließend in Produktionsrichtung R dem Wägesystem 3 zugeführt werden. Das Wägesystem 3 wiegt die einzelnen Produkte P, wobei produktbezogene Daten hinsichtlich jeweiliger Produktgewichte abgespeichert und für den späteren Beladevorgang an der Beladestation 5 abrufbar sind.

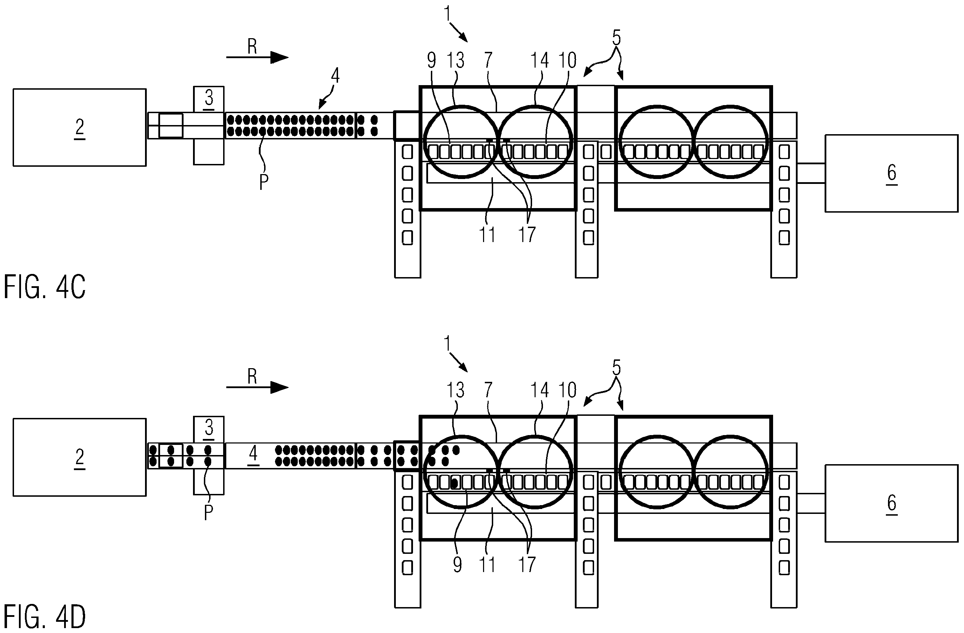

Fig. 4B zeigt, dass die Produkte P, die von dem Wägesystem 3 auf die Zuführeinrichtung 4 übergegangen sind, in einem vorbestimmten Format gruppiert werden. Auf Basis des hergestellten Formats können die jeweiligen Produkte P gemäß Fig. 4C in vorbestimmten Abständen zueinander an das Transportband 7 der Beladestation 5 übergeben werden.

Die Fig. 4C und 4D zeigen, dass an der Aufschneidemaschine 2 ein Nachladen einer neuen Produktcharge stattfindet. Fig. 4D zeigt auch, dass der erste Picker 13 der Beladestation 5 damit beginnt, die auf dem Transportband 7 in die Beladestation 5 hineintransportierten Produkte P in die auf dem ersten Trayförderabschnitt 9 bereitgestellten Trays T zu verladen.

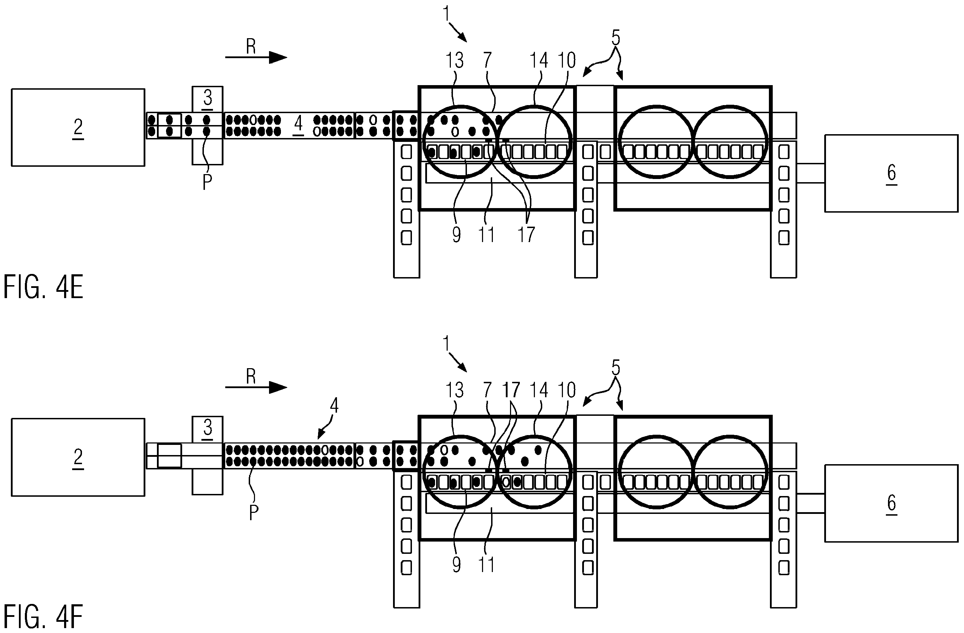

Produkte P, die nicht mittels des ersten Pickers 13 verladen werden, werden gemäß Fig. 4E mittels des Transportbands 7 weiter zum in Transportrichtung R stromabwärts positionierten zweiten Picker 14 transportiert.

Fig. 4F zeigt, dass sowohl der erste Picker 13 als auch der zweite Picker 14 auf dem Transportband 7 bereitgestellte Produkte P in Trays T, die auf dem ersten Trayförderabschnitt 9 und auf dem zweiten Trayförderabschnitt 10 positioniert sind, verladen. Ferner zeigt Fig. 4F, dass eine weitere Charge portionierter Produkte P hergestellt wurde und auf der Zuführeinrichtung 4 bis zur vorausgegangenen Charge aufgeschlossen hat. Die in Fig. 4F gezeigte Zuführeinrichtung 4 ist daher dazu konfiguriert, jeweilige Chargen an Produkten P so zu fördern, dass sie zusammengeführt werden können, um Produkte P in vorbestimmten Abständen kontinuierlich an die nachfolgende Beladestation 5 abzugeben.

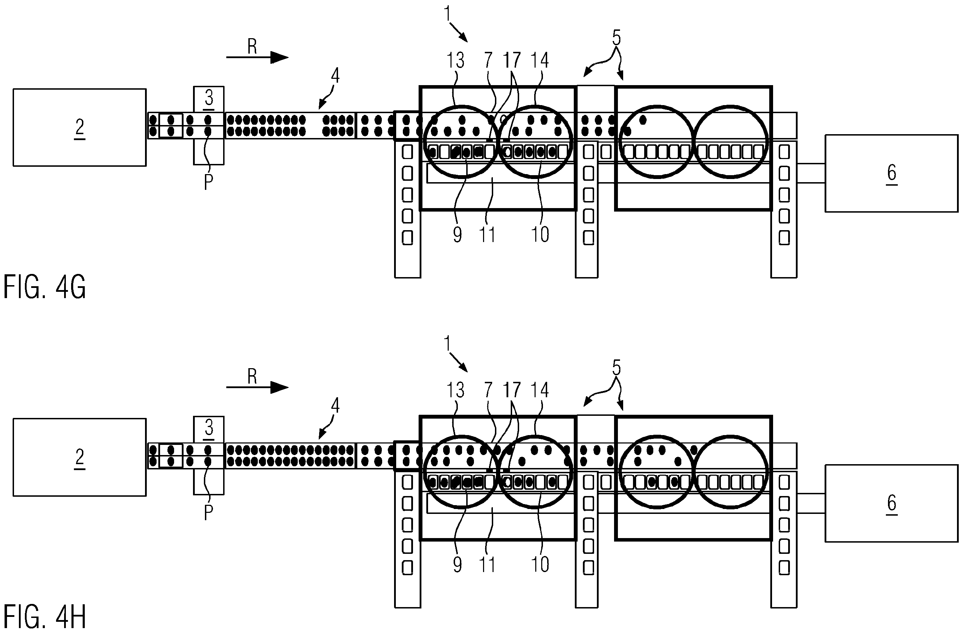

Fig. 4G zeigt, dass manche Produkte P nicht von der in Produktionsrichtung R gezeigten ersten Beladestation 5 verladen wurden. Diese Produkte P werden an die in Produktionsrichtung R nachgelagerte Beladestation 5 transportiert, um darin analog zur vorausgehenden Beladestation verladen zu werden.

In Fig. 4H ist nun sowohl im Bereich des ersten Pickers 13, d.h. auf dem ersten Trayförderabschnitt 9, als auch im Bereich des zweiten Pickers 14, d.h. auf dem zweiten Trayförderabschnitt 10, jeweils ein Tray T vollständig mit Produkten P beladen.

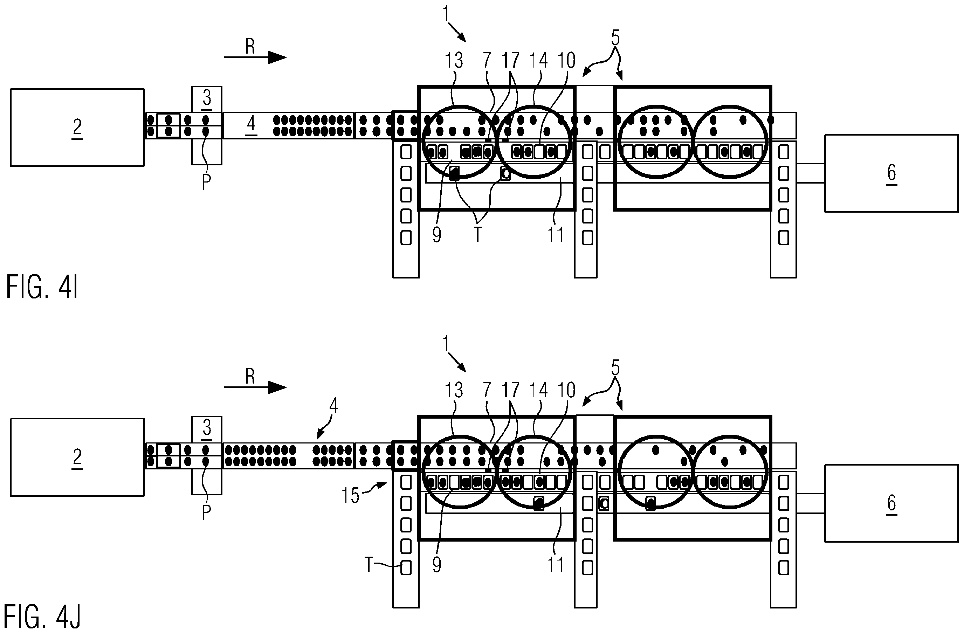

Die beiden vollständig, d.h. sollwertig, mit Produkt beladenen Trays T werden gemäß Fig. 4I an das Abführband 11 transferiert. Im Bereich des ersten Pickers 13 wird der vollständig mit Produkt beladene Tray T mittels des ersten Pickers 13 vom ersten Trayförderabschnitt 9 auf das Abführband 11 geschoben. Im Bereich des zweiten Pickers 14 wird der an vorderster Position vollständig mit Produkt beladene Tray T mittels des mechanischen Pushers 17 auf das Abführband 11 geschoben.

Fig. 4I zeigt damit, dass an der Beladestation 5 vollständig mit Produkt beladene Trays T, die sich an der vordersten Stelle des ersten und/oder zweiten Trayförderabschnitts 9, 10 befinden, mittels des mechanischen Pushers 17 und dahinter positionierte Trays T, im Falle, dass diese früher vollständig mit Produkt P beladen sind, mittels des ersten und/oder zweiten Pickers 13, 14 auf das Abführband 11 geschoben werden können.

Fig. 4J zeigt, dass ein leerer Tray T auf den ersten Trayförderabschnitt 9 nachrücken kann. Das Gleiche gilt für den zweiten Trayförderabschnitt 10. Weiter zeigt Fig. 4J, dass die in Produktionsrichtung R hinter der Beladestation 5 positionierte weitere Beladestation 5 damit beginnt, produktbeladene Trays T auf das Abführband 11 zu verschieben. Die auf das Abführband 11 geschobenen Trays T werden an den Traysealer 6 weiter transportiert, der dazu ausgebildet ist, die sollwertig produktbeladenen Trays T mit einer Deckelfolie zu verschließen.

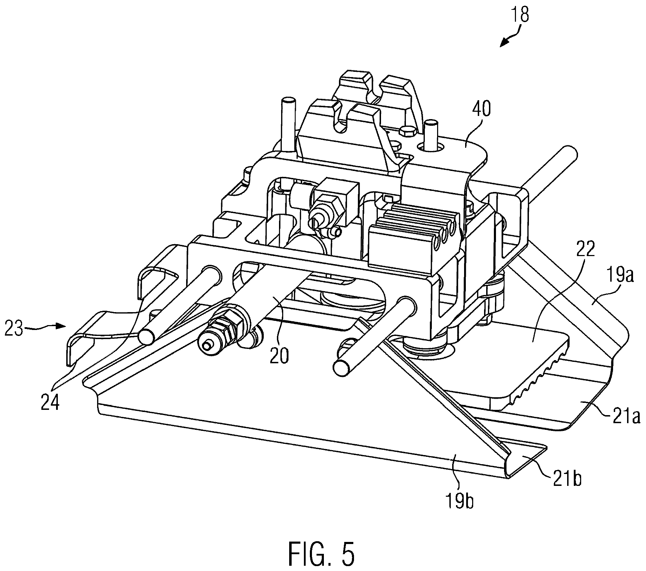

Fig. 5 zeigt eine Greifereinheit 18 der Pickereinrichtung 12. Die Greifereinheit 18 ist dazu ausgebildet, Produkte P innerhalb der Beladestation 5 in Trays T zu verladen. Ferner ist die Greifereinheit 18 dazu konfiguriert, sollwertig mit Produkt beladene Trays T vom Trayförderer 8 auf das Abführband 11 zu verschieben.

Die in Fig. 5 gezeigte Greifereinheit 18 weist einen Produktgreifer 40 auf, der als Niederhaltergreifer vorliegt. Die Greifereinheit 18 besitzt zum Greifen eines Produkts P zwei Aufnahmeschaufeln 19a, 19b. Die beiden Aufnahmeschaufeln 19a, 19b sind mittels eines Pneumatikzylinders 20 verstellbar. Indem die beiden Aufnahmeschaufeln 19a, 19b aufeinander zu bewegt werden, kann ein dazwischen positioniertes Produkt P aufgenommen werden. Dabei schieben sich die beiden Aufnahmeschaufeln 19a, 19b mit daran ausgebildeten Schiebern 21a, 21b unter das aufzunehmende Produkt P. Gemäß Fig. 5 weist die Greifereinheit 18 einen Niederhalter 22 auf, der von oben auf ein mittels der beiden Aufnahmeschaufeln 19a, 19b aufgenommenes Produkt P drückt, um dieses in der Greifereinheit 18 zu fixieren. Der Niederhalter 22 kann mittels des Pneumatikzylinders 20 oder mittels einer gesonderten pneumatischen Antriebseinheit verstellt werden.

Weiter zeigt Fig. 5, dass die Greifereinheit 18 ferner einen Trayschieber 23 aufweist. Der Trayschieber 23 kann dafür eingesetzt werden, vollständig mit Produkt beladene Trays T vom Trayförderer 8 auf das Abführband 11 zu verschieben. Der Trayschieber 23 weist gemäß Fig. 5 eine Schieberkante 24 auf, mittels welcher er auf Kontakt an einen Trayrand des Trays T anstoßen kann, um diesen vom Trayförderer 8 auf das Abführband 11 zu verschieben.

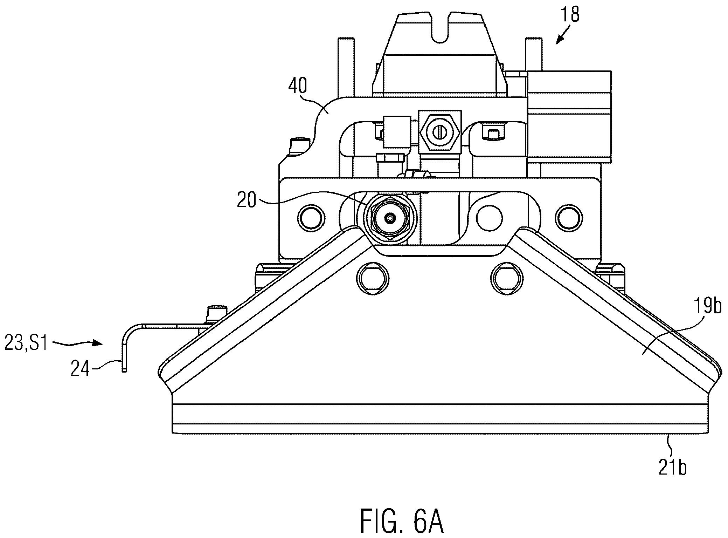

Fig. 6A zeigt die Greifereinheit 18 aus Fig. 5, wobei der daran befestigte Trayschieber 23 in einer eingefahrenen Stellung S1 positioniert ist. In der der eingefahrenen Stellung S1 liegt die Schieberkante 24 des Trayschiebers 25 oberhalb der Schieber 21a, 21b der Aufnahmeschaufeln 19a, 19b. In der in Fig. 6A gezeigten Einstellung ist die Greifereinheit 18 zur Aufnahme eines auf dem Transportband 7 bereitgestellten Produkts P bereit, um dieses vom Transportband 7 abzuholen und in einen auf dem Trayförderer 8 positionierten Tray T einzulegen.

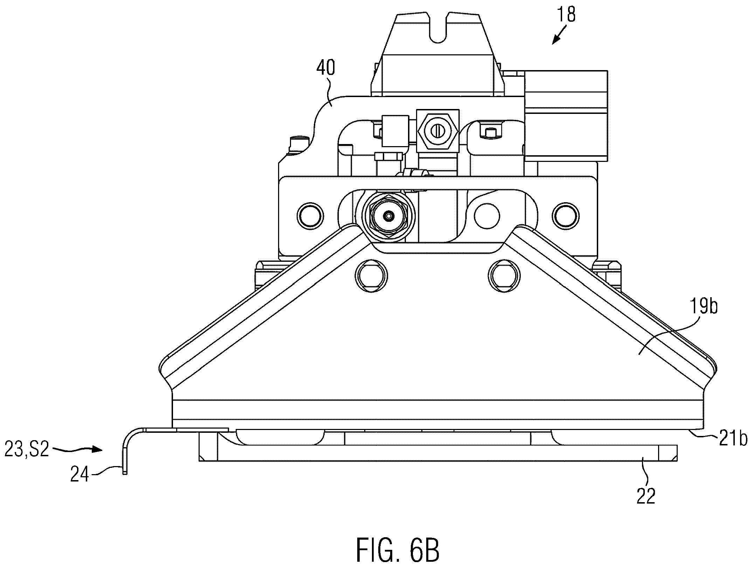

Fig. 6B zeigt den Trayschieber 23 in einer ausgefahrenen Stellung S2. In der ausgefahrenen Stellung S2 liegt die Schieberkante 24 unterhalb der Schieber 21a, 21b der Aufnahmeschaufeln 19a, 19b. Ferner zeigt Fig. 6b, dass der Niederhalter 22 ebenfalls abgesenkt positioniert ist. Gemäß Fig. 6B ist der Trayschieber 23 an dem Niederhalter 22 befestigt, so dass der Trayschieber 23 an eine Bewegung des Niederhalters 22 gekoppelt ist.

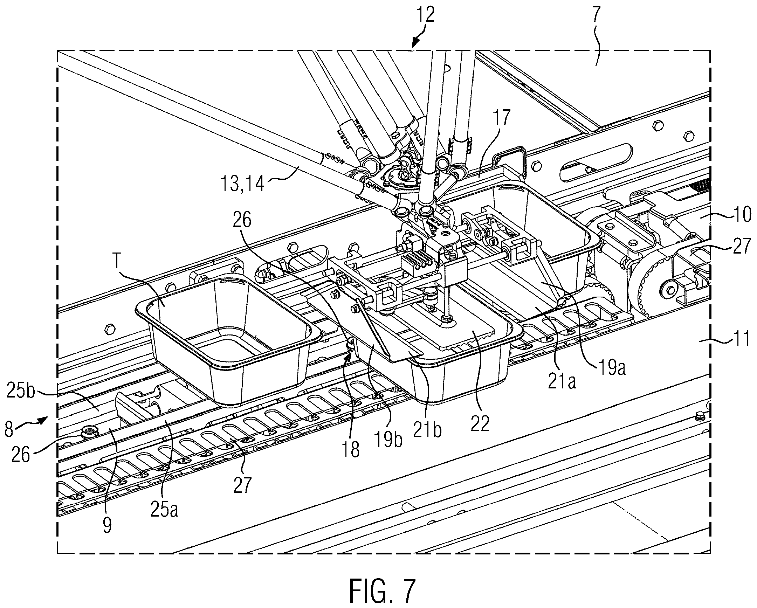

Fig. 7 zeigt den ersten Picker 13 bzw. den zweiten Picker 14 der Pickereinrichtung 12 mit der Greifereinheit 18 aus Fig. 5. In Fig. 7 wird gerade ein Tray T mittels der Greifereinheit 18, insbesondere mittels des daran in die ausgefahrene Stellung S2 verstellten Trayschiebers 23, vom Trayförderer 8 auf das Abführband 11 geschoben. Der Niederhalter 22 ist ebenfalls gemäß den Erläuterungen zur Fig. 6B abgesenkt positioniert, während die beiden Aufnahmeschaufeln 19a, 19b maximal voneinander beabstandet sind.

Ferner zeigt Fig. 7 einen weiteren Tray T, der an der vordersten Stelle des ersten Trayförderabschnitts 9 positioniert ist. Dieser Tray T wird, sobald er sollwertig mit Produkten P beladen ist, mittels des mechanischen Pushers 17 vom ersten Trayförderabschnitt 9 auf das Abführband 11 geschoben. Gemäß der in Fig. 7 gezeigten Ausführung kann damit eine Beladelogik gemäß dem Prinzip "*first full - first out*" durchgeführt werden. Damit ist gemeint, dass der auf dem Trayförderer 8 zuerst vollständig mit Produkten beladene Tray T, sei es hinsichtlich eines gewünschten Gewichts oder hinsichtlich einer gewünschten Anzahl von Produkten P, als erster vom Trayförderer 8 auf das Abführband 11 geschoben wird. Das kann mittels des Pushers 17 oder mittels der Greifereinheit 18 geschehen, je nachdem an welcher Stelle des Trayförderers 8 der Tray T zuerst vollständig beladen ist.

Gemäß Fig. 7 weist der Trayförderer 8 zwei parallel verlaufende Transportriemen 25a, 25b auf. Die beiden Transportriemen 25a, 25b sind voneinander beabstandet geführt und bieten für darauf geförderte Trays T seitliche Auflageflächen. Außerdem zeigt Fig. 7, dass zwischen den beiden Transportriemen 25a, 25b mehrere Saugeinheiten 26 angeordnet sind. Mittels der Saugeinheiten 26 können die jeweiligen Trays T an deren Trayböden angesaugt werden. Damit bleiben die Trays T beim Transport mittels der beiden Transportriemen 25a, 25b in einer gewünschten Ausrichtung positioniert, um mit Produkten P beladen zu werden. Beim Verschieben vollständig beladener Trays T vom Trayförderer 8 auf das daneben positionierte Abführband 11 kann die unterhalb des zu verschiebenden Trays T positionierte Saugeinheit 26 deaktiviert werden, damit sich der Tray T besser auf das Abführband 11 verschieben lässt.

Ferner zeigt Fig. 7, dass zwischen dem Trayförderer 8 und dem Abführband 11 ein Leitsystem 27 angeordnet ist. Das Leitsystem 27 füllt in Fig. 7 eine zwischen dem ersten Trayförderabschnitt 9 und dem Abführband 11 gebildete Lücke und dient als Brücke, über welche der Tray T mittels der Greifereinheit 18 geschoben wird. Gemäß Fig. 7 liegt das Leitsystem 27 gemeinsam mit dem ersten Trayförderabschnitt 9 und dem Abführband 11 in einer gemeinsamen Transportebene für den Tray T, der mittels der Greifereinheit 18 verschoben wird. Das Leitsystem 27 ist höhenverstellbar gelagert. Während des Zuführvorgangs und/oder Beladevorgangs der Trays T kann das Leitsystem 27 angehoben werden, um für die auf dem Trayförderer 8 positionierten Trays T als Trayführung zu funktionieren. Das Leitsystem 27 ist dann seitlich auf Höhe der Trayseitenwände positioniert und stellt sicher, dass die auf dem Trayförderer 8 geförderten Trays T eine gewünschte Ausrichtung beibehalten können. Zum Verschieben vollständig beladener Trays T wird das Leitsystem 27 in die in Fig. 7 gezeigte Stellung abgesenkt, um das Verschieben vollständig beladener Trays T vom Trayförderer 8 auf das Abführband 11 zu ermöglichen.

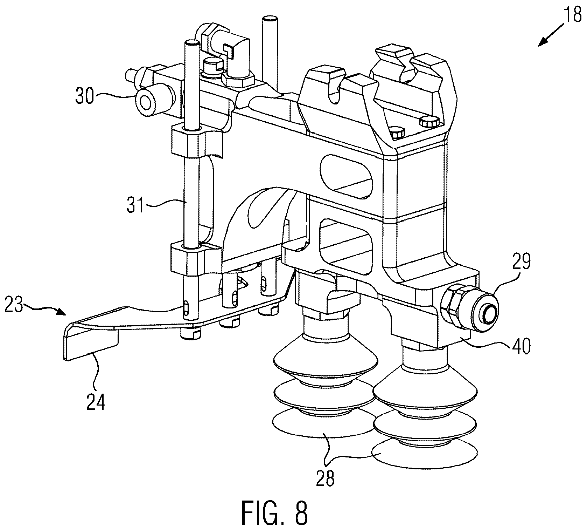

Bei der in Fig. 8 gezeigten Greifereinheit 18 ist der Produktgreifer 40 als Sauggreifer ausgebildet. Der Sauggreifer aus Fig. 8 weist zwei Sauger 28 auf, die über einen Anschluss 29 mit einem Vakuum versorgt werden können. Die beiden Sauger 28 können an einer Oberseite jeweiliger Produkte P ansetzen und diese vom Transportband 7 in die auf dem Trayförderer 8 bereitgestellten Trays T hineinheben.

Fig. 8 zeigt auch, dass an der darin gezeigten Greifereinheit 18 der Trayschieber 23 als gesondert ansteuerbare Einheit ausgebildet ist. Hierfür ist an der Greifereinheit 18 aus Fig. 8 ein pneumatischer Antrieb 30 vorgesehen, mittels dessen sich der Trayschieber 23 zwischen der eingefahrenen Stellung S1 und der ausgefahrenen Stellung S2 bewegen lässt. Gemäß Fig. 8 verfügt der Trayschieber 23 über eine Linearführung 31, die dafür sorgt, dass der Trayschieber 23 v.a. in der ausgefahrenen Stellung S2 zum Verschieben vollständig beladener Trays T stabil ausgelegt ist.

Die in den Fig. 5 und 8 gezeigten Greifereinheiten 18 liegen als modularer Wechselbausatz für die jeweiligen Picker 13, 14 vor und können je nach Beschaffenheit der zu verladenden Produkte P eingesetzt werden.

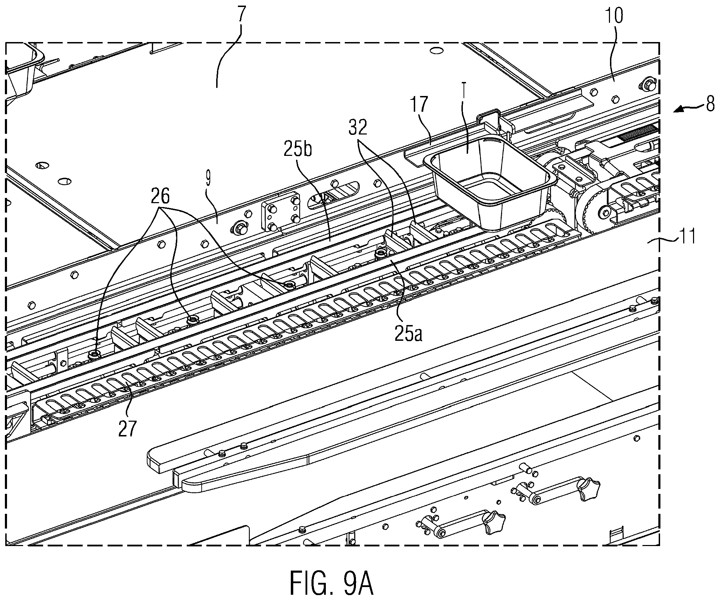

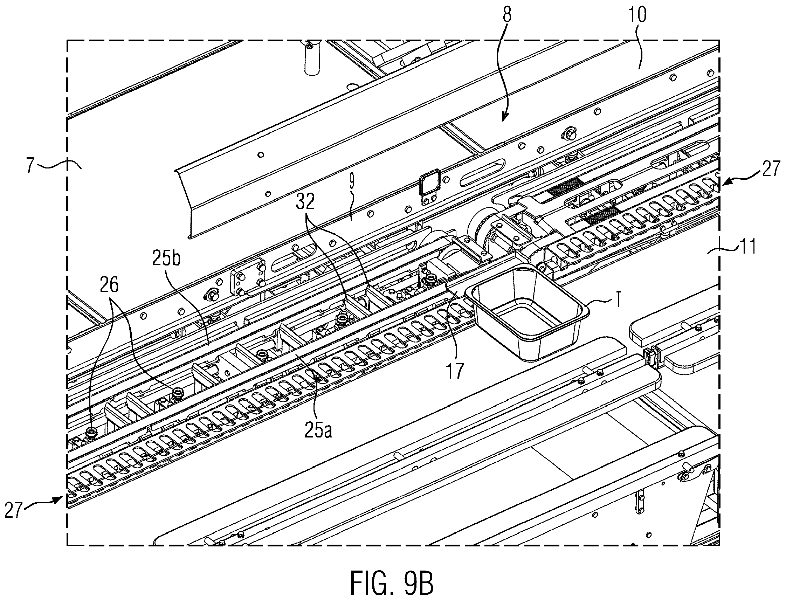

Fig. 9A zeigt den ersten Trayförderabschnitt 9 des Trayförderers 8 mit einem Tray T, der an vorderster Stelle des ersten Trayförderabschnitts 9 positioniert ist. Zum Verschieben des Trays T kann der für den ersten Trayförderabschnitt 9 bereitgestellte mechanische Pusher 17 eingesetzt werden. Das Verschieben des Trays T mittels des mechanischen Pushers 17 von der vordersten Stelle des ersten Trayförderabschnitts 9 über das abgesenkte Leitsystem 27 auf das Abführband 11 wird in Fig. 9B gezeigt.

Ferner zeigen die Fig. 9A und 9B, dass der Trayförderer 8 entlang des ersten Trayförderabschnitts 9 mehrere verstellbare Stopperelemente 32 vorsieht, die hinsichtlich einer Größe der zu beladenden Trays T in Transportrichtung des Trayförderers 8 verstellbar sind. Die Stopperelemente 32 können auch dafür eingesetzt werden, die auf dem Trayförderer 8 positionierten Trays T in gewünschten Abständen zueinander zu halten. Ferner lassen sich mittels der Stopperelemente 32 die jeweiligen Saugeffekte der Saugeinheiten 26 beeinflussen.

Fig. 9B zeigt, dass das Leitsystem 27, welches entlang des zweiten Trayförderabschnitts 10 ausgebildet ist, angehoben positioniert ist, um entlang des zweiten Trayförderabschnitts 10 als Trayführung zum Einsatz zu kommen. Das Leitsystem 27 entlang des ersten Trayförderabschnitts 9 ist zum Verschieben des Trays T abgesenkt positioniert.

## Patentansprüche

1. Verfahren zum Einlegen von Produkten (P) in Trays (T) an einer Beladestation (5) für einen Traysealer (6), **dadurch gekennzeichnet, dass** an der Beladestation (5) von mehreren darin auf einem Trayförderer (8) bereitgestellten Trays (T) ein mittels einer Greifereinheit (18) sollwertig mit Produkt (P) beladener Tray (T) direkt mittels eines an der Greifereinheit (18) ausgebildeten Trayschiebers (23) auf ein Abführband (11) der Beladestation (5) geschoben wird.

2. Verfahren nach Anspruch 1, **dadurch gekennzeichnet, dass** die Greifereinheit (18) den sollwertig mit Produkt (P) beladenen Tray (T) bereits dann auf das Abführband (11) schiebt, wenn ein anderer, auf dem Trayförderer (8) vorausgehend zugeführter Tray (T) noch nicht sollwertig mit Produkt (P) beladen ist.

3. Verfahren nach Anspruch 1 oder 2, **dadurch gekennzeichnet, dass** die Greifereinheit (18) den sollwertig mit Produkt (P) beladenen Tray (T) über ein seitlich am Trayförderer (8) angeordnetes, zwischen einer ersten und einer zweiten Stellung verstellbares Leitsystem (27) auf das Abführband (11) schiebt.

4. Verfahren nach einem der vorangehenden Ansprüche, **dadurch gekennzeichnet, dass** der Trayschieber (23) an der Greifereinheit (18) aus einer eingefahrenen Position (S1) in eine ausgefahrene Position (S2) verstellt wird, um den sollwertig mit Produkt (P) beladenen Tray (T) auf das Abführband (11) zu verschieben.

5. Verfahren nach einem der vorangehenden Ansprüche, **dadurch gekennzeichnet, dass** die auf dem Trayförderer (8) positionierten Trays (T) an deren Trayböden zumindest temporär während des Beladevorgangs angesaugt werden.

6. Beladestation (5) für einen Traysealer (6), umfassend mindestens eine Pickereinrichtung (12) mit einer Greifereinheit (18), die einen Produktgreifer (40) aufweist, der dazu ausgebildet ist, ein der Beladestation (5) bereitgestelltes Produkt (P) aufzunehmen und dieses in einen der Beladestation (5) zugeführten Tray (T) einzulegen, **dadurch gekennzeichnet, dass** die Greifereinheit (18) ferner einen Trayschieber (23) zum Verschieben eines mittels des Produktgreifers (40) beladenen Trays (T) aufweist.

7. Beladestation nach Anspruch 6, **dadurch gekennzeichnet, dass** der Trayschieber (23) mindestens eine Schieberkante (24) zum Verschieben mit Produkt (P) beladener Trays (T) umfasst.

8. Beladestation nach Anspruch 6 oder 7, **dadurch gekennzeichnet, dass** die Greifereinheit (18) mindestens einen pneumatischen Antrieb (20, 30) zum Verstellen des Trayschiebers (23) aufweist.

9. Beladestation nach einem der Ansprüche 6 bis 8, **dadurch gekennzeichnet, dass** die Greifereinheit (18) mindestens eine Linearführung (31) für den Trayschieber (23) umfasst.

10. Beladestation nach einem der Ansprüche 6 bis 9, **dadurch gekennzeichnet, dass** der Produktgreifer (40) als Sauggreifer oder als Niederhaltergreifer ausgebildet ist.

11. Beladestation nach einem der vorangehenden Ansprüche, **dadurch gekennzeichnet, dass** die Beladestation (5) mindestens ein Transportband (7) zum Zuführen einzelner Produkte (P), mindestens einen Trayförderer (8) zum Zuführen von leeren Trays (T) und mindestens ein Abführband (11) zum Abtransport von mit Produkt (P) beladenen Trays (T) umfasst.

12. Beladestation nach Anspruch 11, **dadurch gekennzeichnet, dass** die Beladestation (5) zwischen dem Trayförderer (8) und dem Abführband (11) zumindest abschnittsweise ein Leitsystem (27) aufweist, das zwischen einer ersten Stellung, in welcher das Leitsystem (27) für den Trayförderer (8) als Trayführung einsetzbar ist, und einer zweiten Stellung verstellbar ist, in welcher das Leitsystem (27) zwischen dem Trayförderer (8) und dem Abführband (11) eine Brücke ausbildet, über die mit Produkt (P) beladene Trays (T) schiebbar sind.

13. Beladestation nach Anspruch 11 oder 12, **dadurch gekennzeichnet, dass** der Trayförderer (8) mindestens zwei parallel verlaufende Transportriemen (25a, 25b) sowie mindestens eine dazwischen angeordnete Saugeinheit (26) aufweist, die dazu ausgebildet ist, die mittels des Trayförderers (8) transportierten Trays (T) an deren Trayböden anzusaugen.

14. Beladestation nach einem der Ansprüche 11 bis 13, **dadurch gekennzeichnet, dass** der Trayförderer (8) hinsichtlich einer Größe der zu beladenen Trays (T) mehrere in Transportrichtung (R) des Trayförderers (8) verstellbare Stopperelemente (32) aufweist.

15. Verpackungsanlage (1), die eine Aufschneidemaschine (2) zum Herstellen einzelner Produkte (P), ein Wägesystem (3) zum Wiegen der einzelnen Produkte (P), mindestens eine Beladestation (5) nach einem der vorangehenden Ansprüche 6 bis 14, sowie einen Traysealer (6) zum Verschließen von mit Produkt (P) beladenen Trays (T) umfasst.

## Claims

1. Method for inserting products (P) into trays (T) at a loading station (5) for a tray sealer (6), **characterized in that** a tray (T) of several trays (T) loaded with product (P) by way of a gripper unit (18) to a target value at said loading station (5) and provided therein on a tray conveyor (8) is pushed directly onto a discharge belt (11) of said loading station (5) by way of a tray pusher (23) formed on said gripper unit (18).

2. Method according to claim 1, **characterized in that** said gripper unit (18) pushes said tray (T) loaded with product (P) to a target value onto said discharge belt (11) already when another tray (T) conveyed ahead on said tray conveyor (8) has not yet been loaded with product (P) to a target value.

3. Method according to claim 1 or 2, **characterized in that** said gripper unit (18) pushes said tray (P) loaded with product (P) to a target value onto said discharge belt (11) by way of a guide system (27) arranged on the side of said tray conveyor (8) and adjustable between a first and a second position.

4. Method according to one of the preceding claims, **characterized in that** said tray pusher (23) on said gripper unit (18) is adjusted from a retracted position (S1) to an extended position (S2) for pushing said tray (T) loaded with product (p) to a target value onto said discharge belt (11).

5. Method according to one of the preceding claims, **characterized in that** trays (T) positioned on said tray conveyor (8) are suctioned at their tray bases at least temporarily during the loading process.

6. Loading station (5) for a tray sealer (6), comprising at least one picker device (12) with a gripper unit (18) comprising a product gripper (40) that is configured to pick up a product (P) made available to said loading station (5) and insert it into a tray (T) fed to said loading station (5), **characterized in that** said gripper unit (18) furthermore comprises a tray pusher (23) for pushing a tray (T) loaded by way of said product gripper (40).

7. Loading station according to claim 6, **characterized in that** said tray pusher (23) comprises at least one pusher edge (24) for pushing trays (T) loaded with product (P).

8. Loading station according to claim 6 or 7, **characterized in that** said gripper unit (18) comprises at least one pneumatic drive (20, 30) for adjusting said tray pusher (23).

9. Loading station according to one of the claims 6 to 8, **characterized in that** said gripper unit (18) comprises at least one linear guide (31) for said tray pusher (23).

10. Loading station according to one of the claims 6 to 9, **characterized in that** said product gripper (40) is configured as a suction gripper or as a holding down gripper.

11. Loading station according to one of the preceding claims, **characterized in that** said loading station (5) comprises at least one conveyor belt (7) for feeding individual products (P), at least one tray conveyor (8) for feeding empty trays (T), and at least one discharge belt (11) for removing trays (T) loaded with product (P).

12. Loading station according to claim 11, **characterized in that** said loading station (5) comprises between said tray conveyor (8) and said discharge belt (11) at least in sections a guide system (27) which can be adjusted between a first position in which said guide system (27) can be employed for said tray conveyor (8) as a tray guide, and a second position in which said guide system (27) forms a bridge between said tray conveyor (8) and said discharge belt (11) across which trays (T) loaded with product (P) can be pushed.

13. Loading station according to claim 11 or 12, **characterized in that** said tray conveyor (8) comprises at least two transport belts (25a, 25b) running in parallel as well as at least one suction unit (26) arranged between them which is configured to suctions trays (T) transported by way of said tray conveyor (8) at their tray bases.

14. Loading station according to one of the claims 11 to 13, **characterized in that** said tray conveyor (8) comprises several stopper elements (32) that can be adjusted in the direction of transport (R) of said tray conveyor (8) in terms of the size of said trays (T) to be loaded.

15. Packaging system (1), comprising a slicing machine (2) for producing individual products (P), a weighing system (3) for weighing said individual products (P), at least one loading station (5) according to one of the preceding claims 6 to 14, as well as a tray sealer (6) for sealing trays (T) loaded with product (P).

## Revendications

1. Procédé pour mettre en place des produits (P) sur des plateaux (T) au niveau d'une station de chargement (5) pour une operculeuse (6), **caractérisé en ce qu'**au niveau de la station de chargement (5), parmi plusieurs plateaux (T) mis à disposition sur un convoyeur de plateaux (8), un plateau (T) chargé de manière appropriée d'un produit (P) au moyen d'une unité de préhension (18) est poussé directement sur une bande d'évacuation (11) de la station de chargement (5) au moyen d'un poussoir de plateau (23) réalisé sur l'unité de préhension (18).

2. Procédé selon la revendication 1, **caractérisé en ce que** l'unité de préhension (18) pousse déjà le plateau (T) chargé avec une valeur de consigne du produit (P) sur la bande d'évacuation (11) lorsqu'un autre plateau (T) acheminé précédemment sur le convoyeur de plateaux (8) n'est pas encore chargé du produit (P) avec une valeur de consigne.

3. Procédé selon la revendication 1 ou 2, **caractérisé en ce que** l'unité de préhension (18) pousse le plateau (T) chargé du produit (P) avec une valeur de consigne sur la bande d'évacuation (11) par l'intermédiaire d'un système de guidage (27) agencé latéralement sur le convoyeur de plateaux (8) et réglable entre une première et une seconde position.

4. Procédé selon l'une quelconque des revendications précédentes, **caractérisé en ce que** le poussoir de plateau (23) sur l'unité de préhension (18) est déplacé d'une position rétractée (S1) à une position déployée (S2) afin de déplacer le plateau (T) chargé du produit (P) avec une valeur de consigne sur la bande d'évacuation (11).

5. Procédé selon l'une quelconque des revendications précédentes, **caractérisé en ce que** les plateaux (T) positionnés sur le convoyeur de plateaux (8) sont aspirés au niveau de leurs fonds de plateau au moins temporairement pendant le processus de chargement.

6. Station de chargement (5) pour une operculeuse (6), comprenant au moins un dispositif de prélèvement (12) avec une unité de préhension (18) qui présente un dispositif de préhension de produit (40) qui est conçu pour recevoir un produit (P) mis à disposition de la station de chargement (5) et le mettre en place dans un plateau (T) amené à la station de chargement (5), **caractérisée en ce que** l'unité de préhension (18) présente en outre un coulisseau de plateau (23) pour déplacer un plateau (T) chargé au moyen du dispositif de préhension de produit (40).

7. Station de chargement selon la revendication 6, **caractérisée en ce que** le coulisseau de plateau (23) comprend au moins une arête de coulisseau (24) pour le déplacement de plateaux (T) chargés du produit (P).

8. Station de chargement selon la revendication 6 ou 7, **caractérisée en ce que** l'unité de préhension (18) présente au moins un entraînement pneumatique (20, 30) pour le réglage du coulisseau de plateau (23).

9. Station de chargement selon l'une des revendications 6 à 8, **caractérisée en ce que** l'unité de préhension (18) comprend au moins un guide linéaire (31) pour le poussoir de plateau (23).

10. Station de chargement selon l'une quelconque des revendications 6 à 9, **caractérisé en ce que** le dispositif de préhension de produit (40) est conçu sous la forme d'un dispositif de préhension à aspiration ou sous la forme d'un dispositif de préhension à retenue.

11. Station de chargement selon l'une quelconque des revendications précédentes, **caractérisée en ce que** la station de chargement (5) comprend au moins une bande transporteuse (7) pour l'alimentation de produits individuels (P), au moins un convoyeur de plateau (8) pour l'alimentation de plateaux vides (T) et au moins une bande d'évacuation (11) pour l'évacuation de plateaux (T) chargés du produit (P).

12. Station de chargement selon la revendication 11, **caractérisée en ce que** la station de chargement (5) entre le convoyeur de plateau (8) et la bande d'évacuation (11) présente au moins par endroits un système de guidage (27) qui peut être réglé entre une première position dans laquelle le système de guidage (27) peut être utilisé pour le convoyeur de plateau (8) en tant que guide de plateau, et une seconde position dans laquelle le système de guidage (27) forme un pont entre le convoyeur de plateaux(8) et la bande d'évacuation (11), par l'intermédiaire duquel les plateaux (T) chargés du produit (P) peuvent être déplacés.

13. Station de chargement selon la revendication 11 ou 12, **caractérisé en ce que** le convoyeur de plateau (8) présente au moins deux courroies de transport (25a, 25b) s'étendant parallèlement, ainsi qu'au moins une unité d'aspiration (26) agencée entre celles-ci, qui est conçue pour aspirer les plateaux (T) transportés au moyen du convoyeur de plateau (8) au niveau de leurs fonds de plateau.

14. Station de chargement selon l'une quelconque des revendications 11 à 13, **caractérisée en ce que** le convoyeur de plateau (8) présente plusieurs éléments d'arrêt (32) réglables dans la direction de transport (R) du convoyeur de plateau (8) en ce qui concerne une taille des plateaux (T) à charger.

15. Installation d'emballage (1), qui comprend une machine de découpe (2) pour la fabrication de produits individuels (P), un système de pesage (3) pour le déplacement des produits individuels (P), au moins une station de chargement (5) selon l'une quelconque des revendications 6 à 14 précédentes, ainsi qu'une operculeuse (6) pour la fermeture de plateaux (T) chargés du produit (P).
